# EUROPÄISCHE PATENTSCHRIFT

(11) **EP 0 864 736 B1**
(45) Veröffentlichungstag und Bekanntmachung des Hinweises auf die Patenterteilung: **30.01.2002**
(21) Anmeldenummer: 98103227.9
(22) Anmeldetag: 25.02.1998
(51) Int. Cl.: F02B 17/00, F02B 31/06

(54) **Verfahren zum Betrieb eines Mehrzylinder-Verbennungsmotors sowie Vorrichtung zur Durchführung des Verfahrens**
Method and device for operating a multi-cylinder internal combustion engine
Procédé et dispositif pour faire fonctionner un moteur à combustion interne à plusieurs cylindres

(30) Priorität: 15.03.1997 DE 19710832
(43) Veröffentlichungstag der Anmeldung: 16.09.1998
(73) Patentinhaber: Ford Global Technologies, Inc., Dearborn, Michigan 48136 (US)
(72) Erfinder: Dickers, Guido, 41068 Mönchengladbach (DE); Mayer, Thomas E., 50859 Köln (DE); Phlips, Patrick, Dr., 50858 Köln (DE); Grieser, Klemens, 40764 Langenfeld (DE)
(74) Vertreter: Bonsmann, Manfred, Dipl.-Ing.

(56) Entgegenhaltungen:
- EP-A- 0 446 646
- EP-A- 0 610 679
- DE-A- 3 522 991
- US-A- 4 592 315

## Beschreibung

Die Erfindung betrifft ein Verfahren zum Betrieb eines Mehrzylinder-Verbrennungsmotors mit einer im Zylindereinlaßkanal angeordneten und über eine Steuerung selektiv von einer Ausgangsposition in eine Wirkposition bringbaren Einrichtung zur Beeinflussung der Strömungsverhältnisse im Zylindereinlaßkanal, bei dem in der Wirkposition der Einrichtung die Verbrennungsstabilität bei Gemischen mit einem mageren Luft/Kraftstoffverhältnis erhöht und die Einrichtung in einem vorherbestimmten Drehzahl-/Drehmomentbereich in die Wirkposition gebracht und der Verbrennungsmotor mit einem mageren Gemisch betrieben wird, wobei die Einrichtung in einem außerhalb des vorherbestimmten ersten Drehzahl-/Drehmomentbereichs (a) liegenden zweiten vorherbestimmten Drehzahl-/Drehmomentbereich (b) in die Ausgangsposition gebracht und der Verbrennungsmotor mit einem mageren Gemisch betrieben wird, sowie eine Vorrichtung zur Durchführung des Verfahrens.

Zur Beeinflussung der Strömungsverhältnisse sind z.B. Drallklappen (Swirl Control Valves) bekannt, die innerhalb eines ausgangsseitig jeweils zwei Einlaßventile aufweisenden Zylindereinlaßkanals angeordnet sind. Jede Drallklappe kann über ein von der elektronischen Motorsteuerung kontrollierbares Stellglied in eine Ausgangsposition im wesentlichen parallel oder in eine Wirkposition quer zur Hauptströmungsrichtung im Einlaßkanal gebracht werden.

In der Wirkposition werden die Strömungsverhältnisse im Einlaßkanal derart beeinflußt, daß eine stabilere Verbrennung insbesondere bei mageren Luft-/Kraftstoffverhältnissen möglich ist. Durch selektiven Einsatz einer derartigen Drallklappe kann der Kraftstoffanteil in einem Magermotorgemisch reduziert werden, ohne daß es zu Verbrennungsinstabilitäten (wie z.B. Aussetzern) kommt. Dies ist im Hinblick auf eine Absenkung der Stickoxid-Rohemission wünschenswert, da die Stickoxid-Rohemission grundsätzlich um so niedriger ist, desto magerer der Motor betrieben wird.

Jedoch weist die Drallklappe in der Wirkposition einen relativ hohen Strömungswiderstand auf. Infolgedessen kommt es zu Strömungsverlusten, die den maximalen Luft-/Kraftstoffdurchsatz in den Zylinder begrenzen. Deshalb ist es bei höheren Drehzahl-/Drehmomentanforderungen erforderlich, die Drallklappe von der Wirk- in die Ausgangsposition zu bewegen, um einen ausreichenden Luftdurchsatz zu erzielen. Weiterhin ist es bekannt, den Verbrennungsmotor bei höheren Drehzahl-bzw. Drehmomentanforderungen, wie sie z.B. unter Vollastbedingungen oder bei Beschleunigungen des Kraftfahrzeuges auftreten, mit einem stöchiometrischen bis fetten Gemisch zu betreiben, da die im Magerbetrieb erreichbaren Drehmomente in diesem Falle nicht ausreichen.

Aus diesen Beweggründen wird der Verbrennungsmotor bei bekannten Verfahren in einem vorgegebenen Drehzahl-/Drehmomentbereich mit einem mageren Luft-/Kraftstoffverhältnis bei gleichzeitig in Wirkposition befindlicher Drallklappe betrieben, während bei außerhalb dieses Bereichs liegenden, höheren Drehzahl- bzw. Drehmomentanforderungen die Drallklappe in die Ausgangsposition gebracht und der Motor gleichzeitig mit einem im wesentlichen stöchiometrischen bzw. fetten Gemisch betrieben wird. Durch den stöchiometrischen bzw. fetten Betrieb wird die Kraftstoffökonomie jedoch negativ beeinflußt.

Bei einem in der EP 0 446 646 A1 offenbarten Verfahren wird unterhalb eines vorgegebenen Öffnungsgrades der Drosselklappe ein erster Bereich kleiner Motordrehzahlen vorgesehen, in welchem ein magerer Betrieb des Motors mit der Drallklappe in Wirkposition stattfindet, sowie ein angrenzender Bereich größerer Motordrehzahlen vorgesehen, in dem die Drallklappe in Ausgangsposition ist und ein fetteres Gemisch als im ersten Bereich zum Einsatz kommt. Die EP 0 446 646 A1 offenbart somit ein gattungsgemäßes Verfahren zum Betrieb eines Mehrzylinder-Verbrennungsmotors mit einer im Zylindereinlaßkanal angeordneten und über eine Steuerung selektiv von einer Ausgangsposition in eine Wirkposition bringbaren Einrichtung zur Beeinflussung der Strömungsverhältnisse im Zylindereinlaßkanal, bei dem in der Wirkposition der Einrichtung die Verbrennungsstabilität bei Gemischen mit einem mageren Luft-/Kraftstoffverhältnis erhöht und die Einrichtung in einem vorherbestimmten Drehzahl-/Drehmomentbereich in die Wirkposition gebracht und der Verbrennungsmotor mit einem mageren Gemisch betrieben wird, wobei die Einrichtung in einem außerhalb des vorherbestimmten ersten Drehzahl-/Drehmomentbereichs (a) liegenden zweiten vorherbestimmten Drehzahl-/Drehmomentbereich (b) in die Ausgangsposition gebracht und der Verbrennungsmotor mit einem mageren Gemisch betrieben wird.

Die Aufgabe der vorliegenden Erfindung liegt darin, ein Verfahren der eingangs genannten Art dahingehend zu verbessern, daß eine effektivere Kraftstoffausnutzung und stabilere Verbrennung erzielt wird.

Diese Aufgabe wird durch ein Verfahren mit den in Anspruch 1 genannten Merkmalen gelöst.

Bei dem Verfahren ist vorgesehen, daß die Drallklappe in einem außerhalb des vorherbestimmten ersten Drehzahl-/Drehmomentbereichs liegenden zweiten vorherbestimmten Drehzahl-/Drehmomentbereich in die Ausgangsposition gebracht und der Verbrennungsmotor mit einem mageren Gemisch betrieben wird.

Somit ist ein zusätzlicher Drehzahl-/Drehmomentbereich vorgesehen, in dem der Motor im wesentlichen ohne Strömungsverluste durch die Drallklappe mit einem mageren Luft/Kraftstoffgemisch betrieben werden kann. Dadurch wird ein Magerbetrieb in Drehzahl-/Drehmomentbereichen möglich, in denen der Verbrennungsmotor bisher stöchiometrisch betrieben wurde.

Vorzugsweise kann vorgesehen sein, daß der zweite vorherbestimmte Drehzahl-/Drehmomentbereich höhere Drehzahlen und/oder höhere Drehmomente als der erste vorherbestimmte Drehzahl-/Drehmomentbereich umfaßt.

Der Verzicht auf die Drallklappenwirkung im zweiten Drehzahl-/Drehmomentbereich ist im allgemeinen deshalb möglich, weil die Stabilität des Verbrennungsprozesses bei höheren absoluten Kraftstoffexkursionen, wie sie zur Erzielung der höheren Drehzahlen und/oder Drehmomente in diesem zweiten Bereich erforderlich sind, tendenziell zunimmt.

Neben den genannten Drehzahl-/Drehmomentbereichen können zweckmäßigerweise weitere Drehzahl-/Drehmomentbereiche vorgesehen sein, in denen der Motor mit einem stöchiometrischen bzw. fetten Gemisch betrieben wird, um den Drehzahl- bzw. Drehmomentanforderungen z.B. im Vollastbetrieb zu genügen.

Ferner ist vorgesehen, daß in einem außerhalb des ersten und zweiten Drehzahl-/Drehmomentbereichs liegenden dritten Drehzahl-/Drehmomentbereich die Einrichtung in ihre Wirkposition gebracht und der Verbrennungsmotor mit einem im wesentlichen stöchiometrischen Luft-/Kraftstoffverhältnis betrieben wird. Dieser dritte Bereich umfaßt vorzugsweise gegenüber dem ersten Bereich niedrigere Drehzahlen und/oder Drehmomente, wie sie z.B. im Schiebebetrieb eines den Verbrennungsmotor aufweisenden Kraftfahrzeugs auftreten.

Weiterhin kann in zweckmäßiger Ausgestaltung der Erfindung vorgesehen sein, daß eine durch das Bringen der Einrichtung in die Ausgangs- bzw. in die Wirkposition verursachte Drehmomentänderung des Verbrennungsmotors durch Einwirkung auf die Stellung einer den Luftdurchsatz des Verbrennungsmotors steuerenden Drosselklappe kompensiert wird. Dadurch kann vermieden werden, daß eine Änderung der Drallklappenposition eine vom Fahrer merkbare Geschwindigkeitsänderung des Fahrzeuges zur Folge hat.

Bei einer Vorrichtung zur Durchführung des Verfahrens ist die Einrichtung zur Beeinflussung der Strömungsverhältnisse im Zylindereinlaßkanal als asymmetrische Drallklappe ausgebildet.

Weiterhin kann vorgesehen sein, daß der Zylindereinlaßkanal ausgangsseitig zwei Einlaßventile aufweist, und daß die Geometrie des Zylindereinlaßkanals und die Einlaßventile zur Erzeugung einer Tumble-Strömung (walzenförmigen Strömung) des Gemisches im Zylinder ausgebildet sind.

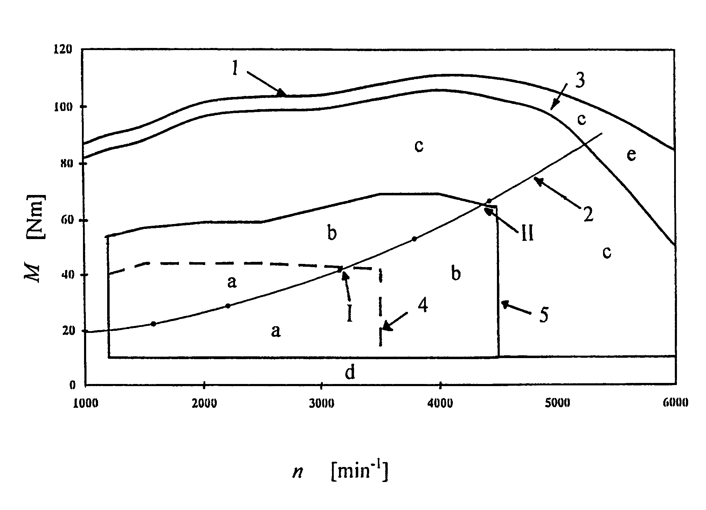

Die Erfindung wird nachfolgend anhand der Zeichnung beispielhaft näher erläutert.

Die einzige Figur zeigt ein schematisches Drehzahl-/Drehmomentdiagramm zur Steuerung eines Kraftfahrzeugverbrennungsmotors gemäß dem erfindungsgemäßen Verfahren, wobei das Motordrehmoment *M* auf der Y-Achse gegenüber der Motordrehzahl *n* auf der X-Achse aufgetragen ist.

Ein nicht dargestelltes Kraftfahrzeug weist in bekannter Weise eine elektronische Motorsteuerung auf. Die Motorsteuerung bestimmt aus den Eingangsgrößen verschiedener Sensoren die aktuelle Motordrehzahl und das aktuell angeforderte Drehmoment. Abhängig von diesen Größen werden in bekannter Weise anhand eines vorgegebenen Tabellenspeichers oder anhand vorgegebener funktionaler Zusammenhänge verschiedene Motorparamter bestimmt, insbesondere die Stellung einer in dem Zylindereinlaßsystemen befindlichen asymmetrischen Drallklappe und eine Vorgabe für die Zusammensetzung des Luft-/Kraftstoffgemisches (mager, stöchiometrisch oder fett).

Dabei sind gemäß der Figur fünf Drehzahl-/Drehmomentbereiche a bis e zu unterscheiden, deren Grenzkurven jeweils mit 1, 3, 4 und 5 bezeichnet sind. Die Drehzahl-/Drehmomentbereiche a bis e werden im folgenden näher erläutert:
- Bereich a:: Betrieb des Motors mit magerem Gemisch, wobei zur Gewährleistung einer stabilen Verbrennung mit möglichst magerem Gemisch die Drallklappe in ihre Wirkposition gebracht wird;
- Bereich b:: Betrieb des Motors mit magerem Gemisch bei höheren Drehmomenten und/oder Drehzahlen, wobei die Drallklappe zur Verminderung von Strömungsverlusten in ihre Ausgangsposition gebracht wird;
- Bereich c:: Betrieb des Motors mit im wesentlichen stöchiometrischem Luft-/Kraftstoffverhältnis und mit in der Ausgangsposition befindlicher Drallklappe;
- Bereich d:: stöchiometrischer Betrieb des Motors mit in Wirkposition befindlicher Drallklappe (Schiebebetrieb);
- Bereich e:: Betrieb mit angereichertem (fettem) Gemisch und in der Ausgangsposition befindlicher Drallklappe (Vollastanreicherung).

Der Vorteil des erfindungsgemäßen Verfahrens wird anhand der beispielhaften Fahrwiderstandskurve 2 deutlich: Bei üblichen Verfahren würde der Verbrennungsmotor ab dem mit I bezeichneten Punkt der Fahrwiderstandskurve stöchiometrisch betrieben, wohingegen mit dem erfindungsgemäßen Verfahren ein kraftstoffsparender Magerbetrieb bis zu dem Punkt II aufrechterhalten werden kann. So können bekannte Magergemischmotoren mit Fahrzeuggeschwindigkeiten von bis zu 140 km/h mit einem Magergemisch betrieben werden, wohingegen bei bekannten Verfahren unter gleichen Bedingungen der Übergang zum stöchiometrischen Betrieb bereits ab etwa 100 km/h stattfinden würde.

Bei sehr niedrigen Drehmomentanforderungen - z.B. im Schiebebetrieb bei einer Bergabfahrt des Fahrzeugs - wird der Motor im Bereich d mit in Wirkposition befindlicher Drallklappe und stöchiometrischem Luft-/Kraftstoffverhältnis betrieben. Der stöchiometrische Betrieb ist in diesem Bereich einem Magerbetrieb vorzuziehen, weil hierdurch eine stabile Verbrennung bei gegenüber einem Magerbetrieb niedrigeren absoluten Kraftstoffexkursionen möglich ist.

Das Bringen der Drallklappe in die Ausgangs- bzw. in die Wirkposition verursacht eine Motordrehmomentänderung. Damit der Fahrer des Kraftfahrzeugs diese nicht wahrnimmt, wird diese durch Einwirkung auf die Stellung einer den Luftdurchsatz des Verbrennungsmotors steuernden Drosselklappe kompensiert.

## Patentansprüche

1. Verfahren zum Betrieb eines Mehrzylinder-Verbrennungsmotors mit einer im Zylindereinlaßkanal angeordneten und über eine Steuerung selektiv von einer Ausgangsposition in eine Wirkposition bringbaren Einrichtung zur Beeinflussung der Strömungsverhältnisse im Zylindereinlaßkanal, bei dem in der Wirkposition der Einrichtung die Verbrennungsstabilität bei Gemischen mit einem mageren Luft-/Kraftstoffverhältnis erhöht und die Einrichtung in einem vorherbestimmten Drehzahl-/Drehmomentbereich in die Wirkposition gebracht und der Verbrennungsmotor mit einem mageren Gemisch betrieben wird, wobei die Einrichtung in einem außerhalb des vorherbestimmten ersten Drehzahl-/Drehmomentbereichs (a) liegenden zweiten vorherbestimmten Drehzahl-/Drehmomentbereich (b) in die Ausgangsposition gebracht und der Verbrennungsmotor mit einem mageren Gemisch betrieben wird, **dadurch gekennzeichnet, daß** in einem außerhalb des ersten (a) und zweiten (b) Drehzahl-/Drehmomentbereichs liegenden dritten Drehzahl-/Drehmomentbereich (d) die Einrichtung in ihre Wirkposition gebracht und der Verbrennungsmotor mit einem im wesentlichen stöchiometrischen Luft-/Kraftstoffverhältnis betrieben wird.

2. Verfahren nach Anspruch 1, **dadurch gekennzeichnet, daß** der zweite vorherbestimmte Drehzahl-/Drehmomentbereich (b) höhere Drehzahlen und/oder höhere Drehmomente als der erste vorherbestimmte Drehzahl-/Drehmomentbereich (a) umfaßt.

3. Verfahren nach Anspruch 1 oder 2, **dadurch gekennzeichnet, daß** der dritte Drehzahl-/Drehmomentbereich gegenüber dem ersten Bereich niedrigere Drehzahlen und/oder Drehmomente umfasst.

4. Verfahren nach einem der Ansprüche 1 bis 3, **dadurch gekennzeichnet, daß** eine durch das Bringen der Einrichtung in die Ausgangs- bzw. in die Wirkposition verursachte Drehmomentänderung des Verbrennungsmotors durch Einwirkung auf die Stellung einer den Luftdurchsatz des Verbrennungsmotors steuerenden Drosselklappe kompensiert wird.

5. Vorrichtung zur Durchführung des Verfahrens nach einem der Ansprüche 1 bis 4, **dadurch gekennzeichnet, daß** die Einrichtung zur Beeinflussung der Strömungsverhältnisse im Zylindereinlaßkanal als asymmetrische Drallklappe ausgebildet ist.

6. Vorrichtung zur Durchführung des Verfahrens nach einem der Ansprüche 1 bis 4 oder nach Anspruch 5, **dadurch gekennzeichnet, daß** der Zylindereinlaßkanal ausgangsseitig zwei Einlaßventile aufweist.

7. Vorrichtung zur Durchführung des Verfahrens nach einem der Ansprüche 1 bis 4 oder nach Anspruch 5 oder 6, **dadurch gekennzeichnet, daß** die Geometrie des Zylindereinlaßkanals und die Einlaßventile zur Erzeugung einer Tumble-Strömung in dem Zylinder ausgebildet sind.

## Claims

1. Method of operating a multi-cylinder internal combustion engine with a device which is arranged in the cylinder inlet port and which can be brought by means of a control device selectively from a starting position into a working position, wherein this device is for the influencing of the flow conditions in the cylinder inlet port, wherein in the working position of the device the combustion stability with mixtures with a lean air / fuel ratio increases and the device in a predetermined speed / torque area is brought into the working position and the internal combustion engine is operated with a lean mixture, wherein the device in a second predetermined speed / torque area (b) lying outside the predetermined first speed / torque area (a) is brought into the starting position and the internal combustion engine is operated with a lean mixture, **characterised in that** in a third speed / torque area (d) lying outside the first (a) and second (b) speed / torque areas the device is brought into its working position and the internal combustion engine is operated with an essentially stoichiometric air / fuel ratio.

2. Method according to Claim 1 **characterised in that** the second predetermined speed / torque area (b) has higher speeds and / or higher torque values than the first predetermined speed / torque area (a).

3. Method according to Claim 1 or 2 **characterised in that** the third speed / torque area has lower speeds and / or torque values compared to the first area.

4. Method according to one of the Claims 1 to 3 **characterised in that** a change in torque of the internal combustion engine caused by the bringing of the device into the starting position or into the working position is compensated through influencing the position of a throttle valve controlling the air throughput of the internal combustion engine.

5. Device for implementing the method according to one of the Claims 1 to 4 **characterised in that** the device for influencing the flow conditions in the cylinder inlet port is formed as an asymmetrical swirl control valve.

6. Device for implementing the method according to one of the Claims 1 to 4 or according to Claim 5 **characterised in that** the cylinder inlet port has on the output side two inlet valves.

7. Device for implementing the method according to one of the Claims 1 to 4 or according to Claim 5 or 6 **characterised in that** the geometry of the cylinder inlet port and the inlet valves are formed for producing a drum-like flow in the cylinder.

## Revendications

1. Procédé d'exploitation d'un moteur multicylindres à combustion interne comprenant un dispositif qui est monté dans le canal d'admission du cylindre et peut être commandé au choix d'une position de départ vers une position active et qui est destiné à influencer les conditions d'écoulement dans le canal d'admission du cylindre, dans lequel procédé, lorsque le dispositif est en position active, la stabilité de la combustion est accrue en présence de mélanges air-combustible à rapport appauvri et, dans un domaine de vitesse de rotation et de couple de rotation défini au préalable, le dispositif est amené vers la position active et le moteur à combustion interne est exploité en régime appauvri, sachant que dans un deuxième domaine de vitesse de rotation et de couple de rotation (b) prédéfini, situé en dehors du premier domaine de vitesse de rotation et de couple de rotation (a) prédéfini, le dispositif est amené vers la position de départ et le moteur est exploité en régime appauvri, **caractérisé en ce que**, dans un troisième domaine de vitesse de rotation et de couple de rotation (d), situé en dehors du premier (a) et du deuxième (b) domaine de vitesse de rotation et de couple de rotation,' le dispositif est amené dans sa position active et le moteur à combustion interne est exploité avec un mélange air-combustible essentiellement stoechiométrique.

2. Procédé selon la revendication 1, **caractérisé en ce que** le deuxième domaine de vitesse de rotation et de couple de rotation (b) prédéfini contient des valeurs de vitesse de rotation et/ou de couple de rotation plus élevées que celles dans le premier domaine de vitesse de rotation et de couple de rotation (a) prédéfini.

3. Procédé selon la revendication 1 ou 2, **caractérisé en ce que** le troisième domaine de vitesse de rotation et de couple de rotation contient, par rapport au premier domaine, des valeurs de vitesse de rotation et de couple de rotation plus faibles.

4. Procédé selon l'une quelconque des revendications 1 à 3, **caractérisé en ce qu'**une variation du couple de rotation du moteur à combustion interne, due au fait que le dispositif est amené vers la position de départ ou la position active, peut être compensée par une action exercée sur la position d'une soupape d'étranglement réglant le passage de l'air dans le moteur à combustion interne.

5. Dispositif destiné à la mise en oeuvre du procédé selon l'une quelconque des revendications 1 à 4, **caractérisé en ce que** le dispositif destiné à influencer les conditions d'écoulement dans le canal d'admission du cylindre est conçu sous forme de clapet d'admission asymétrique.

6. Dispositif destiné à la mise en oeuvre du procédé selon l'une quelconque des revendications 1 à 4 ou selon la revendication 5, **caractérisé en ce que** le canal d'admission du cylindre est muni de deux vannes d'admission du côté de la sortie.

7. Dispositif destiné à la mise en oeuvre du procédé selon l'une quelconque des revendications 1 à 4 ou selon la revendication 5 ou 6, **caractérisé en ce que** la géométrie du canal d'admission du cylindre et les vannes d'admission sont conçues de manière que le mélange circule dans le cylindre avec un écoulement agité.
